# DEMANDE DE BREVET EUROPEEN

(11) **EP 0 624 417 A1**
(43) Date de publication de la demande: **17.11.1994**
(21) Numéro de dépôt: 94401011.5
(22) Date de dépôt: 06.05.1994
(51) Int. Cl.: B23K 15/06, B23K 15/00

(54) **Procédé et dispositif de soudage par faisceau d'électrons de deux pièces d'un composant de grande dimension et notamment d'un générateur de vapeur d'un réacteur nucléaire à eau sous pression**

(30) Priorité: 12.05.1993 FR 9305724
(71) Demandeur: FRAMATOME, 92400 Courbevoie (FR)
(72) Inventeur: Boula, Gérard, F-21190 Meursault (FR); Fournier, Yves, F-71530 Chatenay le Royal (FR)
(74) Mandataire: Bouget, Lucien

(57) **Abrégé**

On entoure la zone de jonction (43) des pièces (27, 29) par une enceinte (38) montée étanche autour d'une partie de la surface externe du composant (31). L'enceinte (38) porte un canon à électrons (39). On établit une pression réduite à l'intérieur d'une chambre (44) délimitée par l'enceinte étanche (38) et par la surface externe du composant (31). On réalise un déplacement relatif entre les pièces (27, 29) et le canon à électrons (39) pour balayer la zone de jonction (43) par un faisceau d'électrons émis par le canon à électrons (39), pendant le soudage. Le procédé peut être utilisé en particulier dans le cadre de la fabrication des générateurs de vapeur des réacteurs nucléaires à eau sous pression.

## Description

L'invention concerne un procédé de soudage par faisceau d'électrons de deux pièces d'un composant de grandes dimensions et notamment, d'un générateur de vapeur d'un réacteur nucléaire à eau sous pression.

Les réacteurs nucléaires à eau sous pression comportent des composants de grandes dimensions tels que des générateurs de vapeur qui présentent une enveloppe externe partiellement cylindrique de grand diamètre et de très grande hauteur. Cette enveloppe externe est généralement réalisée par soudage bout à bout de viroles cylindriques entre elles ou de viroles cylindriques sur un rebord d'assemblage annulaire d'une plaque tubulaire ou d'une virole tronconique.

Sur l'enveloppe externe sont également rapportées, au niveau d'ouvertures de traversée de l'enveloppe, des pièces telles que des supports pour des tapes de fermeture de trous de visite du générateur de vapeur, des piquages ou des conduites d'alimentation du générateur de vapeur. Ces pièces rapportées sont soudées sur l'enveloppe du générateur de vapeur, suivant une zone de jonction débouchant sur la surface externe de l'enveloppe.

Les soudures d'assemblage et de fixation des pièces rapportées sont réalisées par l'extérieur de l'enveloppe du générateur de vapeur.

Le soudage par faisceau d'électrons permet de réaliser, sans métal d'apport, des joints soudés d'une grande qualité métallurgique, avec des temps d'exécution considérablement réduits par rapport aux techniques habituelles, par exemple de soudage à l'arc.

Cependant, l'une des difficultés de mise en oeuvre du soudage par faisceau d'électrons résulte de la nécessité d'établir un vide relativement poussé autour de la zone de raccordement des pièces sur laquelle on dirige le faisceau d'électrons.

Dans le cas de pièces de dimensions modestes, il est possible de réaliser le soudage à l'intérieur d'une enceinte étanche renfermant le canon à électrons dans laquelle les pièces sont introduites et placées dans leur position d'assemblage avant qu'on ne réalise la fermeture étanche de l'enceinte et sa mise sous vide.

Il est bien évident que dans le cas de composants de très grandes dimensions tels que des générateurs de vapeur, le prix de revient d'installations comportant des enceintes étanches de très grandes dimensions et les frais d'exploitation peuvent devenir prohibitifs.

On ne connaissait pas jusqu'ici de procédé de soudage par faisceau d'électrons de pièces d'un composant de grandes dimensions tel qu'un générateur de vapeur, qui puisse être mis en oeuvre de manière simple et rapide afin de limiter le temps nécessaire pour la fabrication du générateur de vapeur.

En particulier, dans le cadre des opérations de remplacement des générateurs de vapeur, il peut être nécessaire de disposer de procédés rapides de fabrication, dans la mesure où il est préférable de programmer la fabrication des générateurs de vapeur qui sont des composants extrêmement coûteux, pour des utilisations précises. Les générateurs de remplacement doivent être disponibles dans un délai bien défini et généralement court.

Le but de l'invention est donc de proposer un procédé de soudage par faisceau d'électrons de deux pièces d'un composant de grandes dimensions tel qu'un générateur de vapeur d'un réacteur nucléaire à eau sous pression, se raccordant suivant une zone de jonction de forme sensiblement annulaire débouchant sur une surface externe du composant, ce procédé de soudage permettant de réduire le temps de fabrication du composant et le coût des installations nécessaires pour réaliser le soudage.

Dans ce but, on entoure la zone de jonction par une enceinte montée étanche autour d'une partie de la surface externe du composant dans laquelle est situé un contour de la zone de jonction annulaire et portant un canon à électrons, on établit une pression réduite à l'intérieur d'une chambre délimitée par l'enceinte étanche et par la surface externe du composant et on produit un déplacement relatif entre les pièces et le canon à électrons pour balayer la zone de jonction par un faisceau d'électrons produit par le canon à électrons pendant le soudage.

Afin de bien faire comprendre l'invention, on va maintenant décrire, à titre d'exemples non limitatifs, en se référant aux figures jointes en annexe, plusieurs modes de réalisation du procédé suivant l'invention et d'installations nécessaires pour sa mise en oeuvre dans le cas du soudage de pièces d'un générateur de vapeur d'un réacteur nucléaire à eau sous pression.

La figure 1 est une vue en élévation et en coupe par un plan vertical d'une installation de soudage pour la mise en oeuvre du procédé suivant l'invention sur une enveloppe de générateur de vapeur en position horizontale.

La figure 2 est une vue en élévation frontale suivant 2-2 de la figure 1.

La figure 3 est une vue en coupe du détail 3 de la figure 1.

La figure 4 est une vue en coupe du détail 4 de la figure 1.

La figure 5 est une vue en coupe d'un piquage raccordé par soudage par faisceau d'électrons à l'enveloppe d'un générateur de vapeur.

La figure 6 est une vue en élévation et en coupe d'une installation suivant un second mode de réalisation permettant de mettre en oeuvre le procédé suivant l'invention pour le soudage de pièces d'une enveloppe de générateur de vapeur en position verticale.

La figure 7 est une vue en coupe à plus grande échelle d'une partie de la figure 6.

La figure 8 est une vue en coupe du détail 8 de la figure 7.

La figure 9 est une vue schématique montrant la cinématique de déplacement du canon à électrons du dispositif représenté sur les figures 6 et 7.

La figure 10 est une vue partielle de dessus suivant 10 de la figure 7, d'une partie du dispositif de soudage.

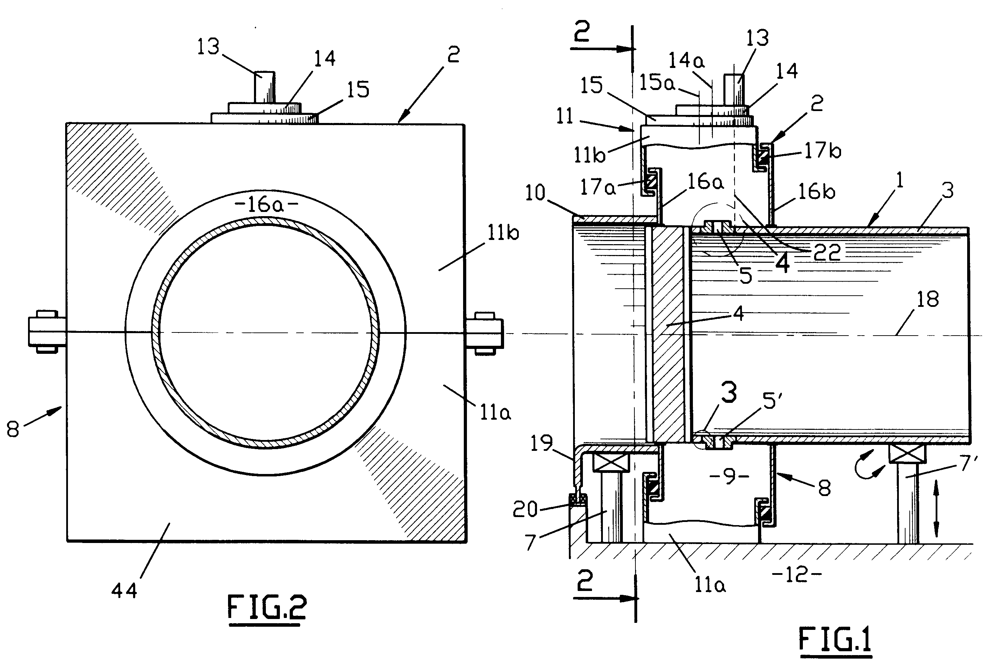

Sur la figure 1, on a représenté la partie inférieure 1 d'une enveloppe externe d'un générateur de vapeur d'un réacteur nucléaire à eau sous pression disposée partiellement à l'intérieur d'une installation 2 permettant de réaliser le soudage par faisceau d'électrons de pièces de l'enveloppe externe.

La partie inférieure 1 du générateur de vapeur est constituée par une virole cylindrique 3 qui est rapportée et fixée par soudage sur une plaque tubulaire 4 de forte épaisseur et qui est traversée, au-dessus de la plaque tubulaire 4, par des ouvertures de visite telles que 5 et 5' au niveau desquelles sont fixés par soudage, des supports de tape de forme globalement cylindrique.

L'installation de soudage par faisceau d'électrons 2 permet de réaliser le joint de soudage circulaire entre la virole 3 et la plaque tubulaire 4 et les joints de soudage également circulaires des piquages pour trous de visite sur la virole 3 constituant l'enveloppe du générateur de vapeur.

L'installation de soudage 2 comporte des supports rotatifs 7 et 7', une enceinte 8 délimitant une chambre annulaire 9 autour de l'enveloppe du générateur de vapeur et une virole d'appui 10 solidaire de l'enceinte 8 et reposant sur le support rotatif antérieur 7.

Comme il est visible sur les figures 1 et 2, l'enceinte 8 comporte une partie fixe 11 de forme sensiblement parallélépipédique constituée de deux parties lla et llb reliées par des vis reposant sur le plancher 12 de l'installation et une partie rotative solidaire de la surface externe de l'enveloppe du générateur de vapeur constituée par la virole 3.

La partie fixe 11 de l'enveloppe 8 porte un canon à électrons 13 par l'intermédiaire de deux plateaux superposés 14 et 15.

La partie mobile de l'enveloppe 8 délimitant la chambre 9 autour de l'enveloppe du générateur de vapeur est constituée par deux éléments de structure 16a et 16b en forme de flasques annulaires fixés de manière étanche par leur partie périphérique interne, sur la surface externe de l'enveloppe du générateur de vapeur.

Des joints glissants 17a et 17b sont intercalés entre les flasques 16a et 16b et la partie fixe 11 de l'enveloppe 8. Les joints 17a et 17b assurent la continuité de l'étanchéité de la paroi 8 et permettent un déplacement en rotation des flasques 16a et 16b par rapport à la partie fixe 11 de l'enveloppe.

Les supports 7 et 7' sont constitués par des colonnes portant des galets de roulement à axes horizontaux sur lesquels reposent la virole 3 de l'enveloppe du générateur de vapeur (support 7') et la virole 10 solidaire de l'enceinte 8 (support 7).

L'ensemble constitué par l'enveloppe du générateur de vapeur et la partie mobile de l'enceinte 8 est ainsi monté mobile en rotation autour de l'axe 18 de l'enveloppe du générateur de vapeur en position horizontale.

Un flasque 19 est fixé à l'extrémité frontale de la virole 10 solidaire de l'enceinte 8 et engagé entre deux butées d'un dispositif de maintien axial 20 fixé sur le plancher 12 de l'installation.

L'enceinte 8 est reliée à un circuit de pompage non représenté qui permet d'établir une pression réduite dans la chambre 9.

Les forces axiales s'exerçant sur les parois de l'enceinte 8 et sur l'enveloppe du générateur de vapeur, après la mise sous vide de la chambre 9, sont reprises par le flasque 19 coopérant avec les butées du dispositif 20.

Une enceinte interne non représentée est également disposée à l'intérieur de la virole 3, de manière qu'une pression réduite soit établie pendant le soudage, du côté interne du joint de soudure.

Les parois constituant l'enceinte étanche peuvent être mises en place à l'intérieur de la virole 3, avec un équipement interne comportant en particulier un talon d'appui venant en contact avec l'extrémité interne du chanfrein de soudage.

Un tel équipement interne fait l'objet d'une demande de brevet déposée par la Société FRAMATOME le même jour que la présente demande.

Le canon à électrons 13 permet d'effectuer le tir d'un faisceau d'électrons 22 qui est dirigé suivant une direction de la zone de jonction entre les pièces à souder débouchant sur la surface externe de l'enveloppe du générateur de vapeur et qui constitue le chanfrein de soudage.

Le plateau 15 est monté rotatif sur la partie fixe supérieure 11b de l'enceinte 8, autour d'un axe 15a de direction radiale par rapport à l'enveloppe 3 et le plateau 14 portant le canon à électrons 13 est monté rotatif autour d'un axe 14a parallèle à l'axe 15a, sur le plateau 15.

De cette manière, comme il sera expliqué plus loin plus en détail, on peut réaliser par rotation du plateau 14 autour de son axe 14a la mise en place du canon à électrons 13 et du faisceau d'électrons 22, suivant une direction de la surface de jonction des pièces et un balayage circulaire, soit par mise en rotation de l'enveloppe 3 et de la partie mobile de l'enceinte 8, soit par mise en rotation du plateau 15.

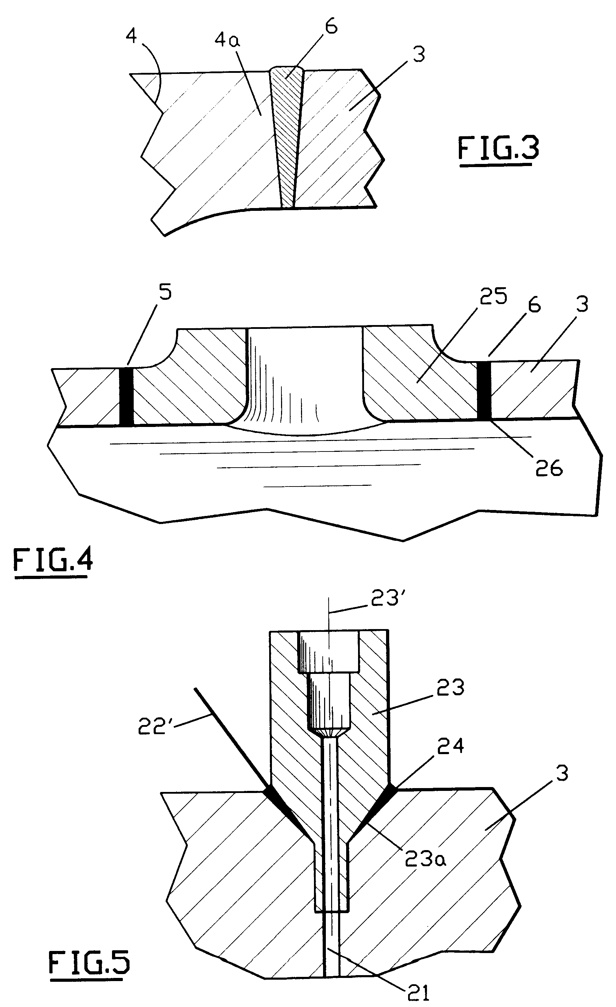

Sur la figure 3, on a représenté la soudure 6 entre la plaque tubulaire 4 et la virole 3, la plaque tubulaire 4 comportant une partie annulaire en saillie 4a ayant une épaisseur identique à l'épaisseur de la virole 3. La partie annulaire en saillie 4a et la virole 3 sont rapportées l'une contre l'autre par leurs surfaces d'extrémité sur lesquelles sont usinées des surfaces de portée et maintenues en position d'assemblage pour réaliser le soudage.

Par rotation du plateau 14, on amène le canon à électrons 13 dans une position telle que le faisceau 22 se trouve suivant une direction radiale de la surface de jonction constituée par la superposition des surfaces de portée de la partie annulaire 4a et de la virole 3, ces surfaces de portée juxtaposées constituant le chanfrein de soudage.

Le plateau 14 est immobilisé sur le plateau 15 qui est lui-même immobilisé sur la partie fixe 11b de l'enceinte 8.

On met sous pression réduite la chambre 9 ainsi que la chambre interne disposée à l'intérieur de la virole 3, au niveau de la zone de jonction, on met en rotation l'ensemble constitué par l'enveloppe 1 du générateur de vapeur et la partie mobile de l'enceinte 8, autour de l'axe horizontal 18 et on met en fonctionnement le canon à électrons 13 pour produire le faisceau d'électrons 22. On réalise ainsi un balayage continu de la zone de jonction entre la virole 3 et la plaque tubulaire 4, si bien que le joint de soudure 6 est réalisé par fusion du métal de la virole 3 et de la plaque tubulaire 4 sur une très faible épaisseur, de part et d'autre de la surface de jonction annulaire.

Il est également possible, en utilisant l'installation 2 dont l'enceinte 8 est placée autour de l'enveloppe du générateur de vapeur, comme représenté sur la figure 1, de réaliser le soudage de pièces circulaires à l'intérieur d'ouvertures traversant la virole 3 du générateur de vapeur.

Sur la figure 4, on a représenté une pièce annulaire 25 fixée à l'intérieur d'un alésage récepteur 5 traversant la paroi de la virole 3 du générateur de vapeur au voisinage de la face supérieure de la plaque tubulaire 4.

La pièce annulaire 25 permet de réaliser la fixation étanche d'une tape de visite sur le trou de l'enveloppe du générateur de vapeur, généralement appelé trou de poing, pour assurer la fermeture étanche de l'enveloppe du générateur de vapeur.

La surface périphérique externe de la pièce 25 et la surface de l'alésage récepteur 5 qui sont juxtaposées définissent un chanfrein de soudage 6 de forme circulaire suivant l'épaisseur de la virole 3 qui débouche sur la surface externe de l'enveloppe du générateur de vapeur.

Pour réaliser le soudage par faisceau d'électrons de la pièce 25 à l'intérieur de l'alésage 5, on réalise le montage d'une enceinte 8 telle que décrite plus haut autour de la surface extérieure de l'enveloppe du générateur de vapeur, de manière à entourer une partie de cette enveloppe dans laquelle sont usinés les alésages tels que 5 et 5'.

Le plateau 14 est placé de manière que le faisceau 22 du canon à électrons 13 soit dirigé suivant une génératrice commune à la surface externe de la pièce 25 et au bord circulaire de l'alésage 5. Cette position du faisceau d'électrons 22 est représentée en pointillés sur la figure 1. L'axe 14a du plateau 14 est aligné avec l'axe de l'ouverture 5. La position du faisceau d'électrons 22 est telle que sa distance à l'axe 14a du plateau 14 soit égale au rayon de l'alésage 5, pour effectuer le soudage des pièces de traversée au niveau des trous de poing.

Le balayage du chanfrein de soudage est réalisé par mise en rotation du plateau 14 autour de son axe 14a.

Il est à remarquer que pour réaliser le soudage d'une pièce de plus grand diamètre que la pièce 25 à l'intérieur d'un alésage d'un diamètre supérieur au diamètre de l'alésage 5, par exemple pour le soudage d'une tubulure d'un trou d'homme, on place l'enceinte 8 autour de l'enveloppe du générateur de vapeur, au niveau du trou d'homme, l'axe 15a du plateau 15 étant aligné avec l'axe du trou d'homme. On place ensuite le canon à électrons 13 dans une position telle qu'il puisse réaliser le tir d'un faisceau d'électrons 22 dans la direction d'une génératrice du trou d'homme puis on bloque le plateau 14 en position sur le plateau 15. Le balayage pour effectuer le soudage est réalisé en faisant tourner le plateau 15 autour de son axe 15a.

Il est ainsi possible de régler le diamètre de la surface balayée par mise en rotation du plateau 15, par réglage de la position du plateau 14 et du canon à électrons 13, entre une valeur minimale et une valeur maximale, comme il sera expliqué plus loin.

Le dispositif de soudage 2 suivant l'invention peut donc être adapté à des opérations de soudage de pièces de dimensions et de formes différentes sur l'enveloppe du générateur de vapeur.

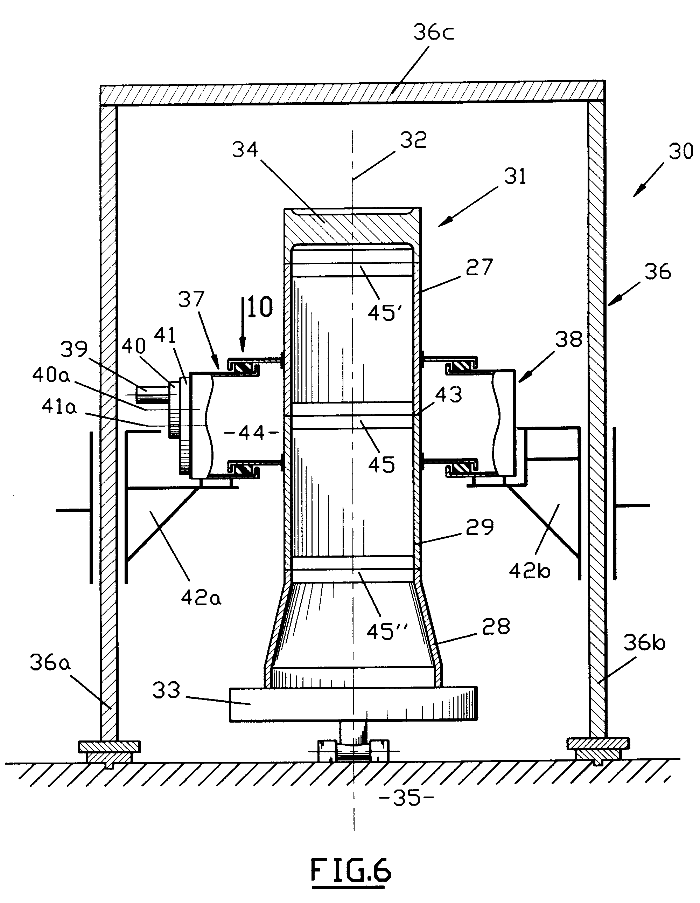

Sur la figure 5, on a représenté un piquage 23 comportant une surface de jonction tronconique 23a, à l'intérieur d'un trou de traversée 21 de l'enveloppe 3 du générateur de vapeur comportant une partie à diamètre réduit dans le prolongement de l'alésage du piquage 23.

L'ouverture 21 de traversée de l'enveloppe du générateur 3 comporte dans sa partie voisine de la surface externe de l'enveloppe 3, une surface tronconique sur laquelle vient s'appuyer la surface tronconique 23a du piquage 23 dans sa position d'assemblage.

Une soudure par faisceau d'électrons 24 peut être réalisée en faisant tourner un faisceau d'électrons 22' incliné par rapport à l'axe du piquage 23', autour de cet axe.

Ce soudage peut être réalisé en utilisant un dispositif de soudage par faisceau d'électrons comme représenté sur la figure 1, en adjoignant au canon à électrons, une bobine magnétique susceptible de créer un champ perpendiculaire au faisceau émis par le canon d'électrons pour dévier ce faisceau de manière à lui faire prendre une inclinaison correspondant à l'inclinaison des génératrices du chanfrein de soudage de forme tronconique.

Le faisceau incliné 22' obtenu peut être mis en rotation autour de l'axe 23' du piquage, par mise en rotation du plateau 15 dont l'axe 15a est aligné avec l'axe 23' du piquage, après avoir réglé la position du canon à électrons 13 en utilisant le plateau 14.

Sur la figure 6, on a représenté un second mode de réalisation d'une installation permettant de mettre en oeuvre le procédé suivant l'invention, cette installation étant désignée de manière générale par le repère 30.

L'installation 30 peut être utilisée pour réaliser l'assemblage de viroles ou de pièces de traversée de l'enveloppe d'un générateur de vapeur désignée de manière générale par le repère 31 et disposée avec son axe 32 suivant la verticale.

L'enveloppe 31 du générateur de vapeur est constituée par deux viroles cylindriques 27 et 29 dont on réalise le soudage bout à bout en utilisant le dispositif suivant l'invention et une virole tronconique 28 soudée bout à bout par l'intermédiaire d'une collerette cylindrique, à l'extrémité libre de la virole cylindrique 29.

L'enveloppe 31 du générateur de vapeur qui est placée dans une disposition retournée par rapport à sa disposition de service, c'est-à-dire avec sa partie inférieure constituée par la plaque tubulaire 34 en position haute, repose par l'intermédiaire de la virole tronconique 28 sur une partie du dispositif de soudage 30 constituée par un plateau tournant et basculant 33 reposant sur le plancher 35 de l'installation de soudage et permettant de mettre en rotation l'enveloppe 31 du générateur de vapeur autour de son axe vertical 32 et de basculer l'enveloppe 31 dans une position dans laquelle l'axe 32 est horizontal.

L'installation de soudage 30 comporte de plus un portique 36 comportant des montants verticaux 36a et 36b et un plateau horizontal 36c reposant sur la partie supérieure des montants verticaux 36a et 36b.

L'installation 30 comporte également le dispositif de soudage proprement dit 37 constitué par une enceinte étanche 38 sur laquelle est fixé un canon à électrons 39, par l'intermédiaire de deux plateaux tournants 40 et 41 ayant des axes de rotation respectifs 40a et 41a.

Le dispositif de soudage 37 repose sur des supports mobiles 42a et 42b qui sont montés glissants dans la direction verticale le long des montants 36a et 36b respectivement et qui sont associés à des dispositifs de déplacement dans la direction verticale et de blocage en position de travail à une certaine hauteur suivant la direction de l'axe 32 du générateur de vapeur.

Le dispositif de soudage 37 qui repose sur les supports 42a et 42b peut être déplacé suivant la direction axiale 32 du générateur de vapeur pour réaliser le soudage par faisceau d'électrons des différentes pièces constitutives de l'enveloppe 31 du générateur de vapeur.

Dans sa position représentée sur la figure 6, l'enceinte 38 du dispositif de soudage 37 entoure la zone de jonction 43 de forme circulaire, entre les viroles cylindriques 27 et 29.

Il est également possible de placer le dispositif de soudage 37 de manière que l'enceinte étanche 38 entoure la partie inférieure de l'enveloppe 31, au voisinage de la plaque tubulaire 34. Le dispositif de soudage 37 peut alors réaliser le soudage de la virole 27 sur la plaque tubulaire 34 et le soudage des supports de tape des trous de visite situés au voisinage de la plaque tubulaire.

On peut donc réaliser en utilisant l'installation 30 représentée sur la figure 6, les mêmes opérations de soudage qu'en utilisant le dispositif représenté sur les figures 1 et 2 qui a été décrit précédemment.

On peut également utiliser le dispositif de soudage 37 pour réaliser le soudage bout à bout par faisceau d'électrons des viroles 28 et 29.

L'enceinte étanche 38 permet de délimiter une chambre 44 autour de l'enveloppe externe du générateur de vapeur ou à l'extérieur de cette enveloppe, la chambre 44 étant mise sous pression réduite pour réaliser le soudage par faisceau d'électrons.

Pour réaliser la soudure bout à bout des viroles 27 et 29 suivant la zone de raccordement 43, on place de plus à l'intérieur de l'enveloppe au niveau de la zone de raccordement, des parois étanches délimitant une chambre interne 45 en face de la zone de raccordement 43.

De même, pour réaliser les opérations de soudage par faisceau d'électrons au voisinage de la plaque tubulaire 34 du générateur de vapeur, on place des parois délimitant une chambre étanche 45' à l'intérieur de l'enveloppe 31 du générateur de vapeur. Enfin, pour réaliser le soudage des viroles 29 et 28 on place, à l'intérieur de l'enveloppe 31, des parois délimitant une chambre 45''. Des circuits de pompage non représentés permettent d'établir des pressions réduites dans la chambre 44 et dans les chambres 45, 45' et 45''.

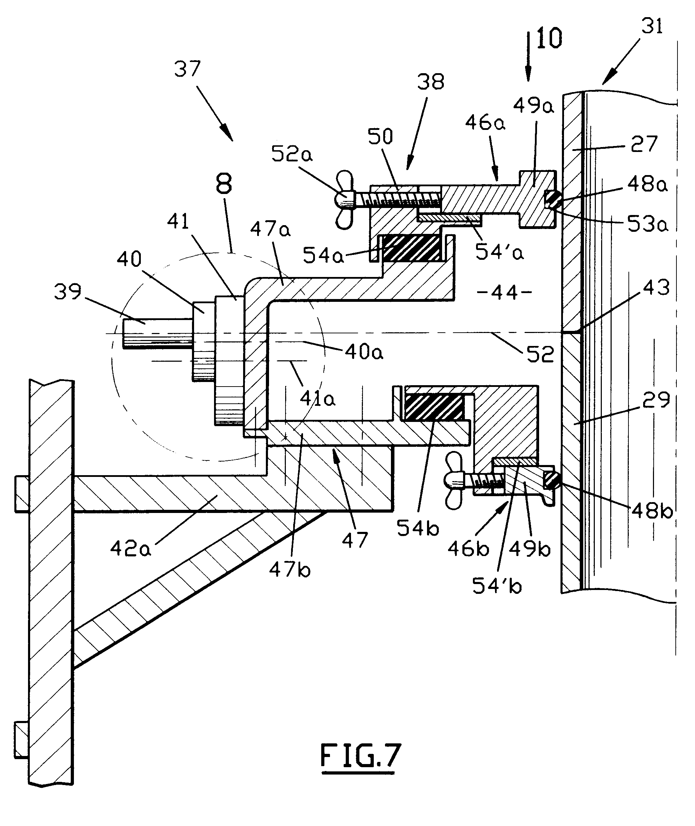

Sur la figure 7, on a représenté une partie du dispositif de soudage 37 dans une position permettant de réaliser le soudage bout à bout par faisceau d'électrons des viroles 27 et 29, au niveau de la zone de jonction 43.

L'enceinte étanche 38 du dispositif de soudage 37 comporte deux parois 46a et 46b fixées sur l'enveloppe du générateur de vapeur constituée par les viroles 27 et 29 sur toute la périphérie de la surface externe de l'enveloppe 31, de part et d'autre de la zone de jonction 43.

L'enceinte étanche 38 comporte de plus une partie complémentaire 47 fixée sur les supports tels que 42a.

Les parois 46a et 46b solidaires de l'enveloppe 31 sont réalisées en plusieurs parties permettant d'assurer le montage de l'enceinte 38 autour de l'enveloppe 31 du générateur de vapeur et la mise en place des joints d'étanchéité 48a et 48b au contact de la surface externe de l'enveloppe 31.

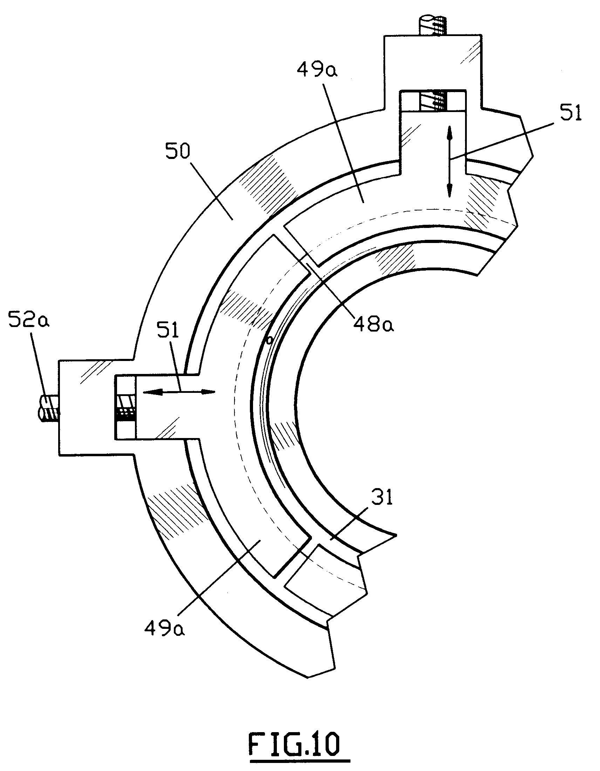

Comme il est visible sur les figures 7 et 10, la paroi 46a comporte une partie interne constituée sous la forme de secteurs circulaires successifs 49a et une partie externe 50 de forme annulaire comportant des encoches de direction radiale pour assurer le guidage de parties en saillie vers l'extérieur des secteurs 49a pour leur déplacement dans la direction radiale dans un sens ou dans l'autre, comme représenté par les flèches 51.

Des vis de réglage telles que 52a montées rotatives dans la partie en saillie radiale du secteur annulaire 49a et bloquées en translation axiale, sont engagées dans une ouverture taraudée de la partie externe 50 de la paroi 46a. Les vis de réglage telles que 52a permettent de déplacer les secteurs annulaires tels que 49a dans la direction radiale, dans un sens ou dans l'autre, comme représenté par la flèche 51. Les secteurs annulaires 49a comportent une rainure interne 53a dans laquelle est engagé le joint gonflable 48a.

La paroi 46a repose, par l'intermédiaire de sa partie périphérique externe 50 et d'un joint glissant 54a, sur la paroi complémentaire 47 immobilisée elle-même sur les supports fixes tels que 42a.

La paroi 46b constituée par des secteurs annulaires 49b présente une structure générale analogue à la structure de la paroi 46a et repose, par l'intermédiaire d'un joint glissant 54b, sur la paroi complémentaire 47. Des joints plats 54'a et 54'b sont intercalés entre les secteurs 49a et 49b respectivement et les parties externes correspondantes.

Les joints glissants 54'a et 54'b sont disposés sur toute la périphérie de la paroi complémentaire 47 de forme annulaire et assurent l'étanchéité de la chambre 44 sur toute la zone de jonction entre les parois 46a et 46b d'une part et la paroi complémentaire 47 d'autre part.

La paroi complémentaire 47 est réalisée en deux parties 47a et 47b qui sont reliées entre elles par des vis avec interposition de joints d'étanchéité, de manière à fermer la chambre 44 de manière totalement étanche.

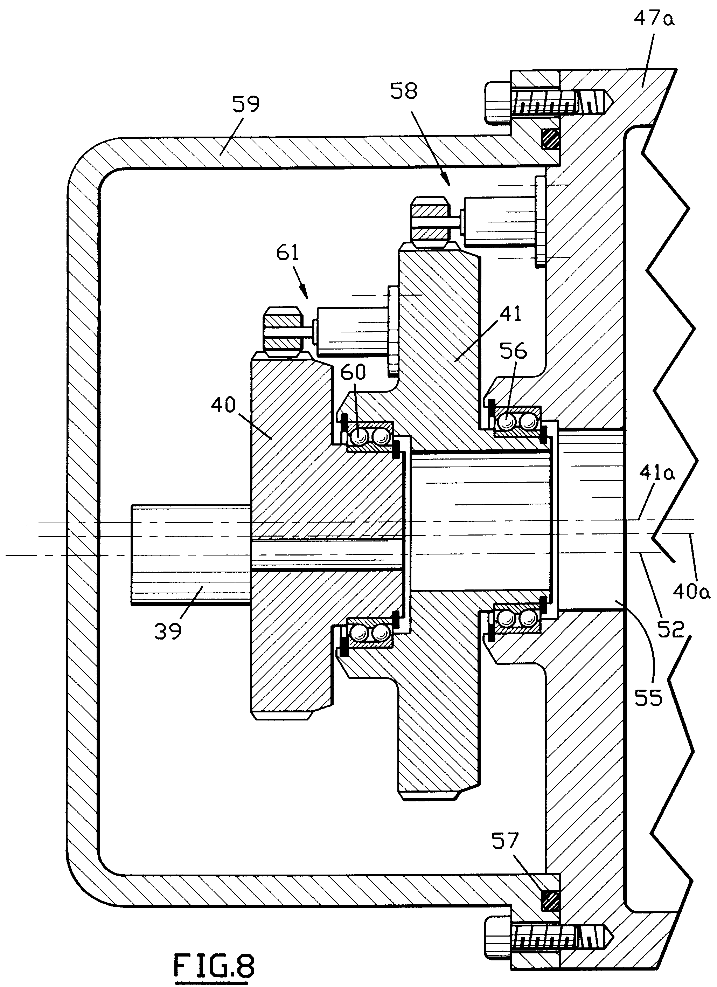

Comme il est visible sur la figure 8, la partie 47a de la paroi complémentaire 47 est percée d'une ouverture 55 permettant le passage du faisceau d'électrons 52 provenant du canon à électrons 39 dans la chambre 44.

L'ensemble constitué par les plateaux tournants 40 et 41 et le canon à électrons 39 est disposé à l'intérieur d'un carter 59 fixé de manière étanche sur la partie 47a de la paroi complémentaire 47 par l'intermédiaire d'un joint d'étanchéité 57.

Le plateau 41 est monté rotatif sur la paroi 47, par l'intermédiaire d'un palier à roulement 56 ayant pour axe l'axe 41a du plateau.

Le plateau 41 peut être entraîné en rotation autour de son axe 41a, par un ensemble de motorisation 58 fixé sur la partie 47a de la paroi 47, comportant un arbre de sortie solidaire d'un pignon d'entraînement engrénant avec une denture usinée sur le bord extérieur du plateau 41 à la manière d'une couronne dentée.

Le plateau 40 est monté rotatif sur le plateau 41, autour de son axe 40a, par l'intermédiaire d'un palier à roulement 60.

Le plateau 40 peut être entraîné en rotation autour de son axe 40a, par un ensemble de motorisation 61 fixé sur le plateau 41, comportant un arbre de sortie solidaire d'un pignon d'entraînement engrénant avec une denture usinée sur le bord externe du plateau 40, à la manière d'une couronne dentée.

Les plateaux 40 et 41 comportent des ouvertures dans le prolongement de l'ouverture 55 permettant d'assurer le passage du faisceau d'électrons 52.

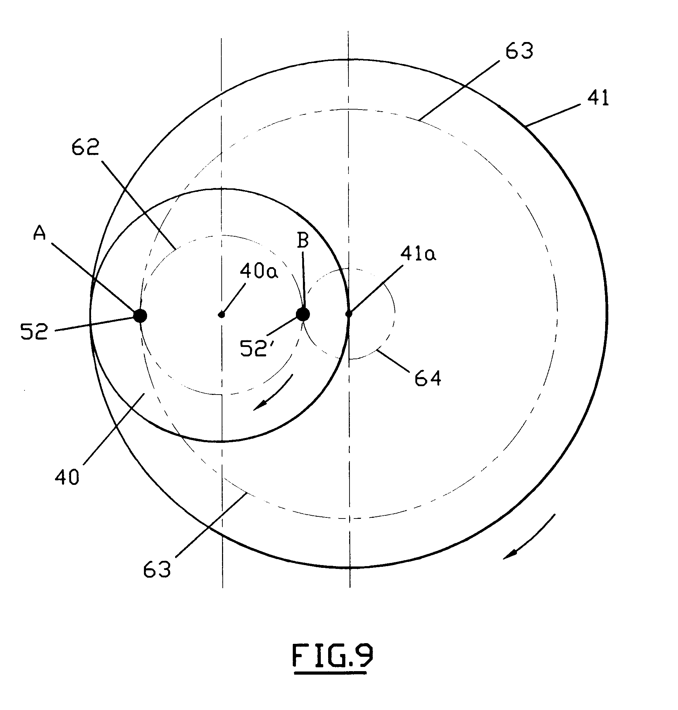

Comme il est visible sur la figure 9, les plateaux 40 et 41 permettent de faire réaliser un balayage par le faisceau d'électrons 52 produit par le canon à électrons porté par le plateau 40, suivant une trajectoire circulaire dont la longueur du rayon peut être réglée.

Si le plateau 41 reste fixe et qu'on fait tourner le plateau 40 portant le canon à électrons 39, le faisceau d'électrons 52 balaye une zone circulaire 62 dont le rayon est égal à la distance entre l'axe 40a du plateau 40 et la direction de tir 52 du canon à électrons 39.

Si l'on fait tourner le plateau 41, le plateau 40 restant fixe sur le plateau 41, le faisceau 52 balaye une zone circulaire d'axe 41a qui peut avoir un rayon réglable à une valeur quelconque entre la longueur du rayon de la zone circulaire 63 correspondant à la position 52 du faisceau d'électrons et la longueur du rayon de la zone circulaire 64 correspondant à la position 52' du faisceau d'électrons.

Pour régler le rayon de balayage du faisceau d'électrons 52, on déplace le plateau 40 en rotation autour de son axe 40a jusqu'au moment où l'axe du canon à électrons correspondant à la direction de tir 52 du faisceau d'électrons parvient dans la position voulue. On fixe alors la position du plateau 40 sur le plateau 41 par blocage de la motorisation 61. Le balayage pour réaliser le soudage par faisceau d'électrons est réalisé par mise en rotation du plateau 41 autour de son axe 41a.

Pour mettre en place l'enceinte étanche 38 du dispositif de soudage 37, autour de l'enveloppe 31 du générateur de vapeur dans laquelle on veut réaliser un ou plusieurs soudages par faisceau d'électrons, on déplace les supports tels que 42a et 42b de la paroi complémentaire 47 jusqu'à une position voulue suivant la direction de l'axe vertical 32 de l'enveloppe 31 du générateur de vapeur, on fixe la partie 47b de la paroi complémentaire 47 sur les supports tels que 42a et 42b puis on engage par le haut, autour de l'enveloppe 31 du générateur de vapeur, la paroi 46b qui vient reposer avec interposition d'un joint glissant 54b sur la partie 47b de la paroi complémentaire.

Bien entendu, pour engager la paroi 46b autour de l'enveloppe 31 du générateur de vapeur, les secteurs 49b de cette paroi analogues aux secteurs 49a de la paroi 46a sont placés dans une position desserrée, par l'intermédiaire de vis analogues aux vis 52a. Dans cette position, les secteurs 49b sont déplacés vers l'extérieur à l'intérieur des encoches de la pièce analogue à la pièce externe 50 de la paroi 46b.

Le joint d'étanchéité 48b qui n'est pas soumis à une pression de fluide de gonflage peut être facilement engagé et glissé le long de la surface externe de la paroi 31.

On réalise alors la fixation de la partie 47a de la paroi complémentaire 47 sur la partie 47b, la partie 47a étant engagée par l'extrémité du générateur de vapeur.

Enfin, la paroi 46a est engagée autour de l'enveloppe 31 du générateur de vapeur et vient reposer par l'intermédiaire du joint glissant 54a sur la partie 47a de la paroi complémentaire 47.

Par manoeuvre des vis telles que 52a, on assure le serrage des secteurs tels que 49a et 49b des parois 46a et 46b, de manière à mettre en contact les joints 48a et 48b avec la surface externe de l'enveloppe 31.

Le gonflage des joints par un fluide sous pression permet de compléter le serrage des parois 46a et 46b contre la surface externe de la paroi 31 et la fermeture étanche de la chambre 44.

Les joints plats 54a' et 54b' assurent l'étanchéité entre les secteurs 49a et 49b d'une part et des pièces telles que 50 d'autre part.

Comme décrit précédemment, on met alors la chambre 44 (ainsi qu'une chambre intérieure telle que 45) sous pression réduite et on réalise le soudage par faisceau d'électrons après réglage de la position du canon 39 en réalisant le balayage soit en faisant tourner l'enveloppe 31 autour de son axe (cas du soudage bout à bout des viroles 27 et 29 suivant le joint 43), soit en faisant tourner l'un des plateaux 40 et 41 (cas du soudage d'une tubulure ou d'un piquage sur l'enveloppe 31).

Dans le cas où l'on désire effectuer un soudage par faisceau d'électrons dans une autre zone suivant la hauteur de l'enveloppe 31, on déplace l'ensemble du dispositif de soudage 37 grâce aux supports mobiles tels que 42a et 42b, après avoir placé les secteurs constituant les parties internes des parois 46a et 46b dans une position desserrée par rapport à la surface externe de l'enveloppe 31.

Dans tous les cas, on peut réaliser très rapidement et très facilement les opérations de soudage par faisceau d'électrons dans une zone quelconque de la paroi du générateur de vapeur.

Le procédé suivant l'invention permet donc de réduire considérablement le temps de préparation et d'exécution des soudures d'assemblage d'un générateur de vapeur et donc le temps nécessaire pour la fabrication de ce générateur de vapeur.

Bien entendu, l'invention ne se limite pas aux modes de réalisation qui ont été décrits.

C'est ainsi que le dispositif de soudage et en particulier la chambre étanche et les moyens de déplacement du canon à électrons peuvent être réalisés sous une forme différente de celle qui a été décrite.

On peut imaginer l'utilisation de tout moyen permettant de déplacer de manière relative le canon à électrons par rapport aux pièces à souder, pour réaliser un balayage suivant une zone de raccordement de forme quelconque.

Bien entendu, le dispositif de soudage et l'enceinte étanche peuvent être réalisés de manière sensiblement analogue pour le soudage d'un générateur de vapeur ayant son axe dans la direction horizontale ou son axe dans la direction verticale.

Enfin, le procédé et le dispositif suivant l'invention peuvent être utilisés pour réaliser le soudage de pièces constitutives d'un composant de grandes dimensions d'un réacteur nucléaire, différent d'un générateur de vapeur.

Le procédé peut également être utilisé pour réaliser des composants de grandes dimensions d'installations différentes de réacteurs nucléaires, dans tout type d'industries.

## Revendications

**1.-** Procédé de soudage par faisceau d'électrons de deux pièces (3, 4, 25, 23, 27, 29) d'un composant (1, 31) de grandes dimensions se raccordant suivant une zone de jonction de forme sensiblement annulaire débouchant sur une surface externe du composant (1, 31), caractérisé par le fait qu'on entoure la zone de jonction (6, 25, 26, 43) par une enceinte (8, 38) montée étanche autour d'une partie de la surface externe du composant (1, 31) dans laquelle est situé un contour de la zone de jonction annulaire et portant un canon à électrons (13, 39), qu'on établit une pression réduite à l'intérieur d'une chambre (9, 44) délimitée par l'enceinte étanche (8, 38) et par la surface externe du composant (1, 31) et qu'on produit un déplacement relatif entre les pièces (3, 4, 25, 23, 27, 29) et le canon à électrons (13, 39) pour balayer la zone de jonction (6, 25, 26, 43) par un faisceau d'électrons produit par le canon à électrons, pendant le soudage.

**2.-** Procédé suivant la revendication 1, caractérisé par le fait que l'enceinte (8, 38) comporte au moins une partie fixe sur laquelle est monté le canon à électrons (13, 39) et que le composant (1, 31) est mis en rotation autour d'un axe de symétrie (18, 32) à l'intérieur de l'enceinte (8, 38).

**3.-** Procédé suivant la revendication 1, caractérisé par le fait que le canon à électrons monté mobile sur l'enceinte (8, 38) est déplacé par rapport à l'enceinte et aux pièces à souder, pour réaliser le balayage de la zone de jonction (26, 24).

**4.-** Procédé suivant la revendication 3, caractérisé par le fait que le canon à électrons (13, 39) est déplacé en rotation, de manière à réaliser le balayage d'une zone de jonction circulaire par le faisceau d'électrons (22, 22', 52).

**5.-** Procédé suivant l'une quelconque des revendications 1 à 4, caractérisé par le fait que l'enceinte (8, 38) est déplacée pour occuper deux positions successives différentes par rapport au composant (1, 31) entre deux opérations de soudage successives, pour réaliser le soudage de pièces (3, 4, 25, 23, 27, 29) dans des zones différentes du composant (1, 31).

**6.-** Dispositif de soudage par faisceau d'électrons de deux pièces (3, 4, 25, 23, 27, 29) d'un composant (1, 31) de grandes dimensions se raccordant suivant une zone de jonction (6, 26, 24, 43) de forme sensiblement annulaire débouchant sur une surface externe du composant (1, 31), caractérisé par le fait qu'il comporte :
- une enceinte (8, 38) comportant des moyens de fixation étanches (48a, 48b) sur la surface externe du composant (1, 31),
- un canon à électrons (13, 39) monté sur une paroi de l'enceinte (8, 38) de manière à diriger un faisceau d'électrons (22, 52) vers l'intérieur de l'enceinte (8, 38), et
- des moyens de déplacement relatif (14, 15, 40, 41, 33) entre les pièces (3, 4, 25, 23, 27, 29) et le canon à électrons (13, 39).

**7.-** Dispositif suivant la revendication 6, caractérisé par le fait que l'enceinte (8, 38) comporte deux parties (11, 16a, 16b, 47, 46a, 46b) montées mobiles et étanches l'une par rapport à l'autre, l'une des parties (16a, 16b, 46a, 46b) étant fixée de manière étanche sur la surface externe du composant (1, 31) et l'autre, indépendante du composant (1, 31).

**8.-** Dispositif suivant la revendication 7, caractérisé par le fait que les moyens de déplacement relatif entre les pièces (3, 4, 27, 29) du composant (1, 31) et le canon à électrons (13, 39) sont constitués par des moyens (33) de mise en rotation du composant (1, 31) autour d'un axe de symétrie (18, 32), le canon à électrons (13, 39) étant fixé sur la partie (11, 47) de l'enceinte (8, 38) indépendante du composant (1, 31) qui est fixe en rotation par rapport au composant.

**9.-** Dispositif suivant l'une quelconque des revendications 7 et 8, caractérisé par le fait que la partie (46a, 46b) de l'enceinte (38) destinée à être fixée sur la surface externe du composant (31) qui est constitué par une enveloppe de forme cylindrique comporte deux ensembles constitués chacun par une couronne (50) et une pluralité de secteurs annulaires (49a, 49b) guidés dans la direction radiale à l'intérieur d'encoches de la couronne (50), ainsi que des moyens (52a) de déplacement dans la direction radiale de chacun des secteurs (49a, 49b), dans un sens en direction de la surface externe du composant (31) de forme sensiblement cylindrique et dans l'autre sens et un joint annulaire gonflable (48a) engagé dans une partie interne des secteurs annulaires (49a, 49b).

**10.-** Dispositif suivant la revendication 9, caractérisé par le fait que deux joints glissants de forme annulaire (54a, 54b) sont intercalés entre chacun des ensembles de la partie (46a, 46b) de l'enceinte (38) fixée sur le composant (31) et la seconde partie (47) de l'enceinte (38) indépendante de l'enveloppe (31).

**11.-** Dispositif suivant l'une quelconque des revendications 7 à 10, caractérisé par le fait que la seconde partie (47) de l'enceinte (38) indépendante du composant (31) comporte deux parties (47a, 47b) reliées entre elles de manière amovible et étanche.

**12.-** Dispositif suivant l'une quelconque des revendications 6 à 11, caractérisé par le fait que le canon à électrons (13, 39) est fixé sur un premier plateau tournant (14, 40), lui-même monté rotatif sur un second plateau tournant (15, 41) monté rotatif sur la paroi de l'enceinte (8, 38), les axes de rotation (14a, 40a) et (15a, 41a) du premier et du second plateaux, respectivement, étant parallèles entre eux et séparés par un intervalle et l'axe du canon à électrons suivant lequel est émis le faisceau d'électrons (52) étant lui-même parallèle à l'axe (14a, 40a) et à l'axe (15a, 41a) du premier et du second plateaux et disposé avec un certain intervalle par rapport à ces axes.
